# EUROPÄISCHE PATENTSCHRIFT

(11) **EP 2 636 545 B1**
(45) Veröffentlichungstag und Bekanntmachung des Hinweises auf die Patenterteilung: **25.10.2017**
(21) Anmeldenummer: 13156319.9
(22) Anmeldetag: 22.02.2013
(51) Int. Cl.: B60D 1/02

(54) **Kupplungseinheit**
Coupling unit
Unité de couplage

(30) Priorität: 08.03.2012 DE 102012203679
(43) Veröffentlichungstag der Anmeldung: 11.09.2013
(73) Patentinhaber: Rockinger Agriculture GmbH, 99880 Waltershausen (DE)
(72) Erfinder: Schack, Jörg, 99869 Hochheim (DE); Begander, Peter, 99867 Gotha (DE)
(74) Vertreter: RLTG

(56) Entgegenhaltungen:
- WO-A2-03/039890
- DE-A1- 3 810 360
- US-A1- 2012 003 036

## Beschreibung

Die Erfindung betrifft eine Kupplungseinheit, insbesondere für eine, vorzugsweise automatisch betätigbare, Bolzenkupplung, insbesondere zur Anbringung an einem landwirtschaftlichen Zugfahrzeug, umfassend einen Fangmaulabschnitt, und einen Lagerbolzenabschnitt.

An dieser Stelle sei darauf hingewiesen, dass der Begriff "Kupplungseinheit" im Zusammenhang mit der vorliegenden Erfindung den Grundkörper der Kupplung bezeichnet, d.h. das, was von einer betriebsbereiten Kupplung übrig bleibt, nachdem man alle beweglichen Teile von ihr entfernt hat.

Gattungsgemäße Kupplungseinheiten sind im Stand der Technik allgemein bekannt. Sie haben allesamt den Nachteil hoher Herstellungskosten.

Aus der DE-A-38 10 360, die den nächstkommenden Stand der Technik bildet, ist eine in eine Stoßstange integrierte Kupplungseinheit bekannt, welche einen Fangmaulabschnitt umfasst, der als Einweisungshilfe für ein Kupplungselement einer Deichsel eines mit dem Zugfahrzeug zu koppelnden Nachlauffahrzeugs ausgebildet und bestimmt ist, sowie einen Gehäuseabschnitt, der zur Aufnahme eines Kupplungsbolzens ausgebildet und bestimmt ist. Die bekannte Kupplungseinheit ist aus zwei Kupplungsuntereinheiten zusammengefügt, von denen jede einen Teil des Fangmaulabschnitts und einen Teil des Gehäuseabschnitts umfasst, wobei die einer Kupplungsuntereinheit zugeordneten Teile miteinander einstückig ausgebildet sind. Zur Befestigung der bekannten Kupplungseinheit an dem Zugfahrzeug enthält die DE-A-38 10 360 keine Angaben.

Zum Stand der Technik sei ferner auf die US-A-2012/0003036 und die WO-A-03/039890 verwiesen.

Demgegenüber ist es Aufgabe der vorliegenden Erfindung, die bekannten Kupplungseinheiten im Hinblick auf ihre Befestigung am Zugfahrzeug weiterzubilden, sie insbesondere so auszubilden, dass sie kostengünstiger und materialsparend hergestellt werden können.

Diese Aufgabe wird erfindungsgemäß durch eine Kupplungseinheit mit den Merkmalen des Anspruchs 1 gelöst. Obgleich die Kupplungseinheit grundsätzlich auch aus mehr als zwei Kupplungsuntereinheiten zusammengesetzt sein kann, wird die Erfindung nachstehend aus Gründen der einfacheren Darstellung für den Fall näher erläutert werden, dass die Kupplungseinheit aus exakt zwei Kupplungsuntereinheiten zusammengesetzt ist.

Aufgrund der erfindungsgemäßen Ausbildung können die Kupplungsuntereinheiten im Wesentlichen in Querrichtung zusammengefügt werden, wobei darauf hinzuweisen ist, dass sich im Zusammenhang mit der vorliegenden Erfindung sämtliche Richtungsangaben auf einen betriebsbereit an einem Fahrzeug motierten Zustand der Kupplung beziehen, in dem die Längsrichtung parallel zur Fahrzeuglängsrichtung verläuft, die Querrichtung parallel zur Fahrzeugquerrichtung verläuft und die Hochrichtung parallel zur Fahrzeughochrichtung verläuft. Aufgrund des Zusammenfügens in Querrichtung sind nicht nur die äußeren Begrenzungsfläche, sondern auch die Begrenzungsflächen sämtlicher inneren Hohlräume der Kupplungseinheit frei zugänglich. Die inneren Hohlräume können daher im Hinblick auf eine Materialeinsparung optimiert gestaltet werden, wobei sich der geringere Materialverbrauch in niedrigeren Herstellungskosten niederschlägt. Durch die erfindungsgemäße Ausbildung können sogar zusätzliche Hohlräume vorgesehen werden, was eine weitere Materialeinsparung ermöglicht. So ist erfindungsgemäß wenigstens einer der den Kupplungsuntereinheiten zugeordneten Teile des Lagerbolzenabschnitts, vorzugsweise beide Teile des Lagerbolzenabschnitts, hohl ausgebildet.

In Weiterbildung der Erfindung wird vorgeschlagen, dass die Kupplunguntereinheiten im zusammengefügten Zustand zumindest abschnittsweise, vorzugsweise vollständig, unmittelbar aneinander anliegen. Im Fall der "vollständigen Anlage" ist die Kupplungseinheit aus exakt zwei Kupplunguntereinheiten zusammengesetzt. Grundsätzlich ist es jedoch auch denkbar, dass wenigstens einer der Abschnitte, nämlich der Fangmaulabschnitt oder/und der Gehäuseabschnitt oder/und der Lagerbolzenabschnitt, aus drei oder mehr Teilen zusammengesetzt ist, so dass die beiden Kupplungsuntereinheiten in diesen Abschnitten infolge der Zwischenanordnung der zusätzlichen Teile nur mittelbar aneinander anliegen.

Obgleich die Trennfläche der wenigstens zwei Kupplungsuntereinheiten grundsätzlich einen beliebigen Verlauf aufweisen kann, der sicherstellt, dass diese Kupplungsuntereinheiten jeweils einen Teil des Fangmaulabschnitts, einen Teil des Gehäuseabschnitts und einen Teil des Lagerbolzenabschnitts umfasst, wobei die einer Kupplungsuntereinheit zugeordneten Teile miteinander einstückig ausgebildet sind, ist es wegen der einfacheren Gestaltung konstruktiv bevorzugt, wenn die Trennfläche der wenigstens zwei Kupplungsuntereinheiten sich im Wesentlichen in Hoch- und Längsrichtung erstreckt. Dabei wird durch die Worte "im Wesentlichen" im Zusammenhang mit der vorliegenden Erfindung zum Ausdruck gebracht, dass die Trennfläche nicht notwendigerweise in einer Ebene zu verlaufen braucht, die von einer zur Hochrichtung parallel verlaufenden Geraden und einer zur Längsrichtung parallel verlaufenden Geraden aufgespannt wird. Vielmehr ist es auch möglich, dass die Trennflächen Schrägflächenabschnitte umfasst, deren Flächennormale nicht exakt in Querrichtung verläuft, oder/und Stufenabschnitte umfasst, solange die Summe der Flächeninhalte der Flächenabschnitte, deren Flächennormale nicht in Querrichtung verläuft, nicht mehr als 50%, vorzugsweise nicht mehr als 25%, noch bevorzugter nicht mehr als 10%, des Flächeninhalts der gesamten Trennfläche beträgt. Ferner ist es denkbar, dass kein Flächenäbschnitt der Trennfläche eine Flächennormale aufweist, die exakt in Querrichtung verläuft, solange die maximale Abweichung von der Querrichtung nicht mehr als 30°, vorzugsweise nicht mehr als 20°, noch bevorzugter nicht mehr als 10° beträgt.

Eine besonders einfache Konstruktion kann dadurch erzielt werden, dass die Trennfläche von der Symmetrieebene der Kupplungseinheit gebildet ist. Dabei berücksichtigt die Verwendung des Begriffs "Symmetrieebene" im Zusammenhang mit der vorliegenden Erfindung, dass insbesondere der Fangmaulabschnitt und der Lagerbolzenabschnitt der Kupplungseinheiten üblicherweise allenfalls geringe Abweichungen von der exakten Spiegelsymmetrie aufweisen, und dass auch die Abweichungen des Gehäuseabschnitts von der exakten Spiegelsymmetrie nicht dessen Grundgestalt betreffen, sondern allenfalls Teilabschnitte, die im fertig montierten Zustand der Kupplung Funktionsteile der Kupplung bzw. deren Betätigungsmechanik tragen.

In Weiterbildung der Erfindung kann vorgesehen sein, dass wenigstens eine der Kupplungsuntereinheiten, vorzugsweise beide Kupplungsuntereinheiten, als Schmiedeteil ausgebildet ist bzw. sind. Herkömmliche Kupplungseinheiten sind üblicherweise als Gussteil ausgebildet. Die Herstellung als Sphärogussteil hat jedoch den Nachteil, dass sich bei ihnen eine deutliche Verschleißproblematik zeigt. Stahlgussteile haben diesen Nachteil zwar nicht, so dass sich Stahlguss grundsätzlich ebenfalls zur Herstellung der Kupplungsuntereinheiten eignet. Stahlgussteile sind aber zumindest derzeit zum einen teuer in der Herstellung und zum anderen schwer zu beschaffen. Schmiedeteile haben demgegenüber zum einen den Vorteil, dass es für Schmiedeteile eine ausreichende Anzahl von zueinander im Wettbewerb stehenden Zulieferunternehmen gibt, was sich aus die Herstellungskosten vorteilhaft auswirkt. Zum anderen haben Schmiedeteile den Vorteil, dass sie eine geringere Verschleißanfälligkeit aufweisen als beispielsweise Sphärogussteile. Insbesondere ermöglicht es das Schmieden, jene Volumenbereiche der Kupplungsuntereinheiten, die im Betrieb der fertig montierten Kupplung erhöhter Belastung ausgesetzt sind, durch das Schmieden zu verdichten. Dies ermöglicht es darüber hinaus, an jenen Volumenbereichen der Kupplungsuntereinheiten, die im Betrieb der fertig montierten Kupplung geringerer Belastung ausgesetzt sind, Materialeinsparungen vorzunehmen.

Vorteilhafterweise können die Kupplungsuntereinheiten aus Stahl gefertigt sein. Grundsätzlich ist es jedoch auch denkbar, sie aus Eisen zu fertigen, beispieslweise als Eisengussteil.

Die Kupplungsuntereinheiten können beispielsweise unlösbar miteinander verbunden sind, beispielsweise durch Verschweißen oder/und Verkleben. Es ist jedoch auch denkbar, sie lösbar miteinander zu verbinden, beispielsweise durch Verschrauben oder/und Verklemmen.

Die Erfindung wird im Folgenden anhand der beigefügten Zeichnung an einem Ausführungsbeispiel näher erläutert werden. Es stellt dar:
- Figur 1: eine perspektivische Ansicht einer aus zwei Kupplungsuntereinheiten zusammengesetzten erfindungsgemäßen Kupplungseinheit; und
- Figur 2: eine perspektivische Ansicht der beiden Kupplungsuntereinheiten im noch nicht zusammengefügten Zustand.

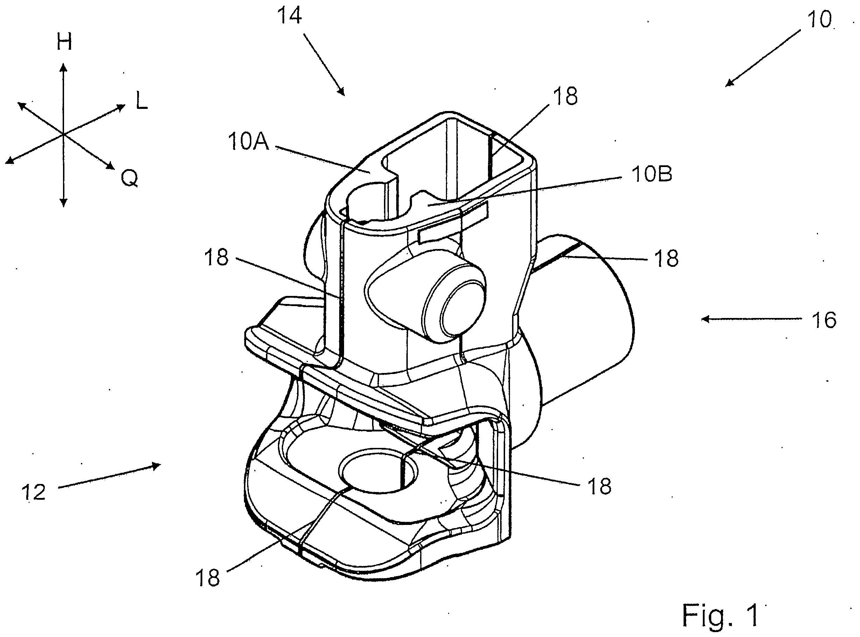

Die in Figur 1 dargestellt erfindungsgemäße Kupplungseinheit 10 umfasst einen Fangmaulabschnitt 12, einen Gehäuseabschnitt 14 und einen Lagerbolzenabschnitt 16. Der Fangmaulabschnitt 12 dient in bekannter Weise als Einweisungshilfe für das Kupplungselement, beispielsweise für die Zugöse, einer Deichsel eines Nachlauffahrzeugs, das mit dem Zugfahrzeug, an dem die Kupplungseinheit montiert ist, gekoppelt werden soll. Ferner dient der Gehäuseabschnitt 14 zur Aufnahme einer Betätigungsmechanik zum Betätigen des Gegenkupplungselements, beispielsweise des Kupplungsbolzens, der Kupplungseinheit 10. Schließlich dient der Lagerbolzenabschnitt 16 zur Aufnahme in einem Befestigungslager, das üblicherweise am Heck des Zugfahrzeugs angebracht ist.

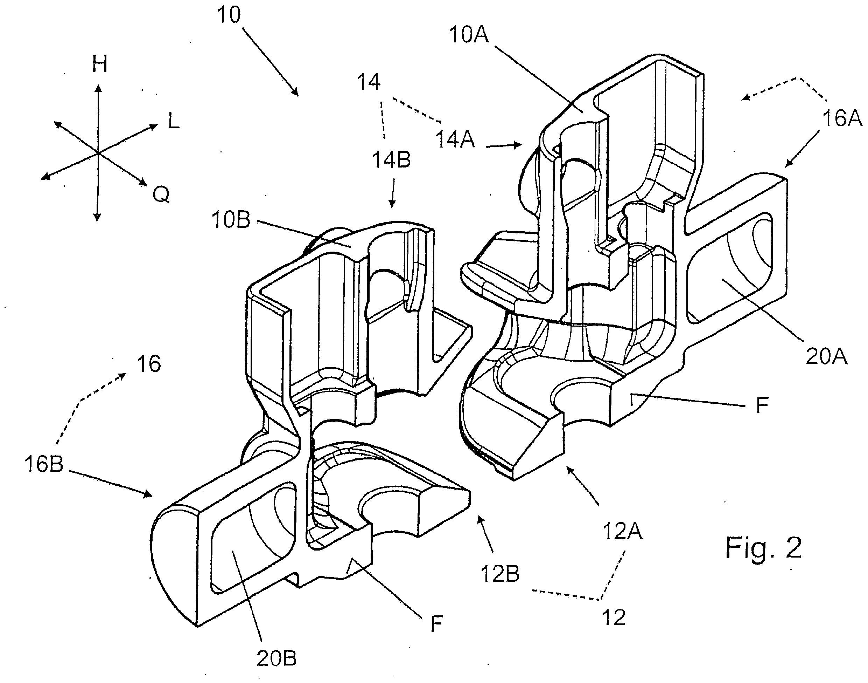

Wie man in Figur 1 anhand der Linienabschnitte 18 erkennt, ist die Kupplungseinheit 10 im Wesentlichen entlang ihrer in Hochrichtung H und in Längsrichtung L verlaufenden Symmetrieebene in zwei Kupplungsuntereinheiten 10A und 10B geteilt (siehe auch Figur 2). Die den Linienabschnitten 18 entsprechende Trennfläche ist in Figur 2 mit F bezeichnet. Erfindunggemäß ist jede der beiden Kupplungsuntereinheiten 10A und 10B einstückig mit einem Teil 12A bzw. 12B des Fangmaulabschnitts 12, einem Teil 14A bzw. 14B des Gehäuseabschnitts 14 und einem Teil 16A bzw. 16B des Lagerbolzenabschnitts 16 ausgebildet. Wie in Figur 2 dargestellt ist, weisen die Teile 12A, 12B, 14A, 14B, 16A und 16B jeweils eine Ausnehmung auf, die aufgrund der Tatsache, dass die Kupplungsuntereinheiten 10A, 10B längs ihrer Symmetrieebene geteilt sind, alle hinterschneidungsfrei ausgebildet sind, so dass sie in einfacher Weise durch Schmieden hergestellt werden können.

Im Zusammenhang mit der vorliegenden Erfindung von besonderer Relevanz sind dabei die beiden Ausnehmungen 20A und 20B der beiden Teile 16A und 16B des Lagerbolzenabschnitts 16. Derartige Ausnehmungen sind bei herkömmlichen Kupplungseinheiten nicht vorhanden, da dort keine Möglichkeit eines Zugriffs auf das Innere des Lagerbolzenabschnitts bestand. Infolge der erfindungsgemäßen Teilung der Kupplungseinheit 10 kann der Lagerbolzenabschnitt 16 nunmehr hohl ausgebildet werden, was Material und somit Gewicht und Kosten einspart. Darüber hinaus besteht auch die Möglichkeit, die Gestalt der Ausnehmungen des Fangmaulabschnitts 12 und des Gehäuseabschnitts 14 im Hinblick auf eine Materialeinsparung an geringer mechanischer Belastung ausgesetzten Abschnitten der Kupplungseinheit 10 zu optimieren. Hoher mechanischer Belastung ausgesetzte Abschnitte der Kupplungseinheit 10 können hingegen durch den Schmiedevorgang verdichtet und somit widerstandsfähiger gemacht werden.

## Patentansprüche

1. Kupplungseinheit (10), insbesondere für eine, vorzugsweise automatisch betätigbare, Bolzenkupplung, insbesondere zur Anbringung an einem landwirtschaftlichen Zugfahrzeug, umfassend:
- einen Fangmaulabschnitt (12), der als Einweisungshilfe für ein Kupplungselement einer Deichsel eines mit dem Zugfahrzeug zu koppelnden Nachlauffahrzeugs ausgebildet und bestimmt ist, und
- einen Lagerbolzenabschnitt (16), der zur Aufnahme in einem Befestigungslager des Zugfahrzeugs ausgebildet und bestimmt ist, und
- einen Gehäuseabschnitt (14), der zur Aufnahme einer Betätigungsmechanik ausgebildet und bestimmt ist,
wobei die Kupplungseinheit aus wenigstens zwei Kupplungsuntereinheiten (10A, 10B) zusammengefügt ist, von denen jede einen Teil (12A bzw. 12B) des Fangmaulabschnitts (12), einen Teil (16A bzw. 16B) des Lagerbolzenabschnitts (16) und einen Teil (14a bzw. 14B) des Gehäuseabschnitts (14) umfasst, wobei die einer Kupplungsuntereinheit (10A bzw. 10B) zugeordneten Teile (12A, 14A, 16A bzw. 12B, 14B, 16B) miteinander einstückig ausgebildet sind, und wobei wenigstens einer der den Kupplungsuntereinheiten (10A, 10B) zugeordneten Teile (16A, 16B) des Lagerbolzenabschnitts (16) hohl ausgebildet ist.

2. Kupplungseinheit nach Anspruch 1,
**dadurch gekennzeichnet, dass** die beiden Kupplungsuntereinheiten (10A, 10B) im zusammengefügten Zustand zumindest abschnittsweise, vorzugsweise vollständig, unmittelbar aneinander anliegen.

3. Kupplungseinheit nach Anspruch 1 oder 2,
**dadurch gekennzeichnet, dass** eine Trennfläche (F) der beiden Kupplungsuntereinheiten (10A, 10B) sich im Wesentlichen in Hochrichtung (H) und in Längsrichtung (L) erstreckt.

4. Kupplungseinheit nach Anspruch 3,
**dadurch gekennzeichnet, dass** die Trennfläche (F) von der Symmetrieebene der Kupplungseinheit (10) gebildet ist.

5. Kupplungseinheit nach einem der Ansprüche 1 bis 4,
**dadurch gekennzeichnet, dass** wenigstens eine der Kupplungsuntereinheiten (10A, 10B), vorzugsweise beide Kupplungsuntereinheiten, als Schmiedeteil ausgebildet ist bzw. sind.

6. Kupplungseinheit nach Anspruch 5,
**dadurch gekennzeichnet, dass** wenigstens einer der Volumenbereiche der Kupplungsuntereinheiten (10A, 10B), die im Betrieb der fertig montierten Kupplung erhöhter Belastung ausgesetzt sind, durch das Schmieden verdichtet ist.

7. Kupplungseinheit nach einem der Ansprüche 1 bis 6,
**dadurch gekennzeichnet, dass** die Kupplungsuntereinheiten (10A, 10B) aus Stahl oder Eisen gefertigt sind.

8. Kupplungseinheit nach einem der Ansprüche 1 bis 7,
**dadurch gekennzeichnet, dass** die Kupplungsuntereinheiten (10A, 10B) unlösbar miteinander verbunden sind, beispielsweise durch Verschweißen oder/und Verkleben.

9. Kupplungseinheit nach einem der Ansprüche 1 bis 7,
**dadurch gekennzeichnet, dass** die Kupplungsuntereinheiten (10A, 10B) lösbar miteinander verbunden sind, beispielsweise durch Verschrauben oder/und Verklemmen.

## Claims

1. Coupling unit (10), in particular for a bolt coupling, preferably automatically operable, in particular for mounting at an agricultural towing vehicle, comprising:
- a jaw section (12) adapted and intended as guiding support for a coupling element of a drawbar of a towed vehicle to be coupled with the towing vehicle, and
- a bearing bolt section (16) adapted and intended for reception in an attachment bearing of the towing vehicle, and
- a housing section (14) adapted and intended for receiving an actuation mechanism,
wherein the coupling unit is assembled with at least two coupling subunits (10A, 10B), each of which comprises a part (12A or 12B) of the jaw section (12), a part (16A or 16B) of the bearing bolt section (16) and a part (14a or 14B) of the housing section (14), wherein the parts (12A, 14A, 16A or 12B, 14B, 16B) associated to a coupling subunit are formed as one single piece and wherein at least one of the parts (16A, 16B) of the bearing bolt section (16) associated to the coupling subunits (10A, 10B) is hollow.

2. Coupling unit according to claim 1,
**characterized in that** two coupling subunits (10A, 10B) in the assembled state at least partially, preferably completely, directly abut one another.

3. Coupling unit according to claim 1 or 2,
**characterized in that** a separating surface (F) of the two coupling subunits (10A, 10B) extends substantially in the height direction (H) and in the longitudinal direction (L).

4. Coupling unit according to claim 3,
**characterized in that** the separating surface (F) is formed by the symmetry plane of the coupling unit (10).

5. Coupling unit according to one of claims 1 to 4,
**characterized in that** at least one of the coupling subunits (10A, 10B), preferably both coupling subunits are formed as a forged piece.

6. Coupling unit according to claim 5,
**characterized in that** at least one of the volume areas of the coupling subunits (10A, 10B) which during operation of the mounted coupling are exposed to increased stresses, is compacted by forging.

7. Coupling unit according to one of claims 1 to 6,
**characterized in that** the coupling subunits (10A, 10B) are made of steel or iron.

8. Coupling unit according to one of claims 1 to 7,
**characterized in that** the coupling subunits (10A, 10B) are mutually and inextricably linked, for example by welding or/and adhesive bonding.

9. Coupling unit according to one of claims 1 to 7,
**characterized in that** the coupling subunits (10A, 10B) are mutually and releasably linked, for example by screwing or clamping.

## Revendications

1. Unité d'accouplement (10), en particulier pour un accouplement à broches, de préférence automatiquement opérable, en particulier pour le montage à un véhicule tracteur agricole, comprenant:
- une section bouche (12) adaptée et destinée comme aide de guidage pour un élément d'accouplement d'une barre de traction d'un véhicule tracté à coupler au véhicule tracteur,
et
- une section de boulon de palier (16) adaptée pour et destinée à la réception dans le palier de fixation du véhicule tracteur, et
- une section de boîtier (14) adaptée pour et destinée à la réception d'un mécanisme d'actuation,
l'unité d'accouplement étant assemblée d'au moins deux sous-unités d'accouplement (10A, 10B), chacune comprenant une portion (12A ou 12B) de la section bouche (12), une portion (16A ou 16B) de la section de boulon de palier (16) et une portion (14a ou 14B) de la section de boîtier (14), où les portions (12A, 14A, 16A ou 12B, 14B, 16B) associées à une sous-unité d'accouplement (10A, 10B) sont formées en une pièce, et où au moins une des portions (16A, 16B) de la section de boulon de palier (16) associées aux sous-unités d'accouplement (10A, 10B) est formée de manière creuse.

2. Unité d'accouplement selon la revendication 1,
**caractérisée en ce que** les deux sous-unités d'accouplement (10A, 10B) sont, dans la condition montée, au moins partiellement, de préférence entièrement directement adjacentes.

3. Unité d'accouplement selon la revendication 1 ou la revendication 2,
**caractérisée en ce qu'**une surface de séparation (F) des deux sous-unités d'accouplement (10A, 10B) s'étend essentiellement dans le sens vers le haut (H) et dans le sens longitudinal (L).

4. Unité d'accouplement selon la revendication 3,
**caractérisée en ce que** la surface de séparation (F) est formée par le plan de symétrie de l'unité d'accouplement (10).

5. Unité d'accouplement selon une des revendications 1 à 4,
**caractérisée en ce qu'**au moins une des sous-unités d'accouplement (10A, 10B), de préférence les deux sous-unités d'accouplement (10A, 10B) est ou sont adaptées comme pièce forgée.

6. Unité d'accouplement selon la revendication 5,
**caractérisée en ce qu'**au moins une des sections de volume des sous-unités d'accouplement (10A, 10B) qui pendant l'opération de l'accouplement monté sont exposées à une charge accrue, sont densifiées par le forgeage.

7. Unité d'accouplement selon une des revendications 1 à 6,
**caractérisée en ce que** les sous-unités d'accouplement (10A, 10B) sont fabriquées d'acier ou de fer.

8. Unité d'accouplement selon une des revendications 1 à 7,
**caractérisée en ce que** les sous-unités d'accouplement (10A, 10B) sont reliées de manière indissociable, par exemple par le soudage ou/et le collage.

9. Unité d'accouplement selon une des revendications 1 à 7,
**caractérisée en ce que** les sous-unités d'accouplement (10A, 10B) sont reliées de manière libérable, par exemple par le vissage ou/et le coincement.
